# EUROPÄISCHE PATENTSCHRIFT

(11) **EP 1 239 261 B1**
(45) Veröffentlichungstag und Bekanntmachung des Hinweises auf die Patenterteilung: **25.06.2008**
(21) Anmeldenummer: 02001220.9
(22) Anmeldetag: 17.01.2002
(51) Int. Cl.: G01B 11/24, G01B 11/16, G01M 17/02, G01J 1/02

(54) **Prüfeinrichtung und -verfahren für verformbare Prüflinge**
Testing device and method for deformable objects
Appareil et procédé d'examen pour objets déformables

(30) Priorität: 09.03.2001 DE 10111301
(43) Veröffentlichungstag der Anmeldung: 11.09.2002
(73) Patentinhaber: Dengler, Stefan, 75365 Calw-Stammheim (DE)
(72) Erfinder: Dengler, Stefan, 75365 Calw-Stammheim (DE)
(74) Vertreter: Schober, Christoph D.

(56) Entgegenhaltungen:
- EP-A- 0 125 246
- DE-A- 19 856 398
- DE-A1- 4 036 120
- GB-A- 1 278 476
- US-A- 4 936 138

## Beschreibung

Die Erfindung betrifft eine Prüfeinrichtung und ein Prüfverfahren für verformbare Prüflinge, insbesondere für Reifen.

Bei der Untersuchung von Reifen mittels interferenzoptischer Verfahren, sind diese mit kohärentem Licht zu beleuchten. Dies ist beispielsweise aus der DE 40 36 120 C2 bekannt. Diese offenbart die Analyse von Testobjekten mittels Shearographie. Zur Durchführung der Shearographie wird von dem Prüfling reflektiertes kohärentes Licht in zwei Lichtwegen zunächst getrennt geführt, wobei wenigstens der eine Lichtweg durch eine Verstelleinrichtung in seiner Länge oder Winkelausrichtung etwas verstellbar ist. Ausgewertet wird das entstehende Überlagerungsbild.

Das Verfahren beruht auf dem von dem Gegenstand reflektierten Licht. Bei der Untersuchung von Reifen oder anderen aus schwarzem Gummi bestehenden Körpern ist deswegen eine erhebliche Lichtintensität erforderlich.

Laserdioden sind bis zu einer Leistung von etwa 50 Milliwatt verfügbar. Stärkere kohärente Lichtquellen stellen einen erheblich erhöhten Aufwand dar und machen deshalb entsprechende interferenzoptische Prüfeinrichtungen häufig unwirtschaftlich. Sollen Prüflinge mit schlecht reflektierender (schwarzer) Oberfläche untersucht werden, ist eine hohe Beleuchtungsstärke erforderlich, die schwierig zu erreichen ist. Es wird deshalb häufig mit Kameras gearbeitet, die an der unteren Empfindlichkeitsgrenze betrieben werden.

Die GB-A-1 278 476 offenbart ein Verfahren zum Erkennen von Fehlstellen in Reifen. Zu diesem Zweck wird der sich auf einem Rad befindende Reifen aufgeblasen und mit kohärentem Licht beleuchtet. Das Verfahren nutzt die sich aus dem Aufblasen des Reifens ergebenden Spannungen aus, die im Bereich einer Fehlstelle eine lokale Verformung des Reifens hervorrufen, die sich über einen gewissen Zeitraum verändert. Diese als "Kriechen" bezeichnete Veränderung der Verformung wird mittels interferometrischer Holographie erfasst, um die Fehlstelle zu detektieren. Um das Maß des Kriechens zu erhöhen, wird der Reifen durch eine Infrarotlampe erwärmt.

Die DE 198 56 398 A1 offenbart ein Verfahren zur Bestimmung der Dehnung oder der Spannung eines Prüfobjekts, bei dem die Oberfläche des Prüfobjekts durch wenigstens zwei Lichtquellen beleuchtet wird, die jeweils kohärentes Licht emittieren. Die Lichtstrahlen der Lichtquellen treffen mit unterschiedlichen Einfallswinkeln auf die Oberfläche des Prüfobjekts und ermöglichen auf diese Weise, das Prüfobjekt auf Basis einer räumlichen Phasenmessung shearographisch zu untersuchen.

Der Erfindung liegt die **Aufgabe** zugrunde, eine Prüfeinrichtung und ein Prüfverfahren zu schaffen, mit denen sich Prüflinge mit schwach reflektierender Oberfläche auf wirtschaftliche Weise untersuchen lassen.

Diese Aufgabe wird mit der Prüfeinrichtung gemäß Anspruch 1 und mit einem Prüfverfahren gemäß Anspruch 14 **gelöst**. Bevorzugte Ausgestaltungen der Erfindung werden in den Ansprüchen 2 bis 13 und 15 bis 18 definiert.

Bei der Erfindung wird davon ausgegangen, dass der Prüfling in dem zu prüfenden Bereich sowohl mit kohärentem als auch mit inkohärentem Licht beleuchtet wird. Das inkohärente Licht, beispielsweise diffuses weißes Licht, dient dazu, eine Grundhelligkeit zu erzeugen, mit der die beteiligte Bildaufnahmeeinrichtung zunächst aus dem Bereich ihres Schwarzrauschens heraus geführt wird. Vorzugsweise wird die Helligkeit der inkohärenten Beleuchtung dabei so eingestellt, dass die betreffende Kamera oder sonstige Bildaufnahmeeinrichtung der Prüfeinrichtung im Bereich ihrer maximalen Empfindlichkeit arbeitet. Das Strukturbild das von der vorzugsweise gleichzeitig erfolgenden kohärenten Beleuchtung des gleichen Bildbereichs herrührt, überlagert das durch Weißlichtbeleuchtung erhaltene Bild, bleibt für sich genommen jedoch unverfälscht. Das Strukturbild ist bei Verwendung kohärenten Lichts ein Interferenzbild. Es kann auf herkömmliche Weise ausgewertet werden. Damit wird durch die kombinierte Beleuchtung (kohärent und inkohärent) zum einen die erforderliche Beleuchtungsstärke und zum anderen die gewünschte Ausbildung eines Interferenzbildes erreicht. Dessen Modulationstiefe (Kontrast zwischen hellen und dunklen Interferenzstreifen) ist gegenüber einer Beleuchtung nur mit kohärentem Licht aus der gleichen kohärenten Lichtquelle im Wesentlichen unverändert.

Die Überlagerung einer Grundhelligkeit bewirkt die Verlagerung des Arbeitspunkts der Bildaufnahmeeinrichtung in den Bereich maximaler Empfindlichkeit. Bei geeigneten Einsatzbeispielen wird eine erhöhte Signalstärke erreicht. Insbesondere aber verbessert sich bei der Erfindung gegenüber herkömmlichen Verfahren, die mit schlechten Beleuchtungsverhältnissen arbeiten, das Signalrauschverhältnis. Der gesamte Pegel wird aus dem Bereich des Schwarzrauschens gehoben, ohne den Interferenzeffekt (Speckleeffekt) zu stören. Die lokale Helligkeitsmodulation, die durch die Interferenzeffekte verursacht werden, bleibt erhalten. Sie ist lediglich um einen von der inkohärenten Beleuchtung verursachten Offset zu größeren Helligkeitswerten hin verschoben.

Zur kohärenten Beleuchtung können ein oder mehrere Lichtquellen Anwendung finden, beispielsweise Laser oder Laserdioden. Diese können einander vollständig oder teilweise überlappende Lichtkegel aufweisen. Wesentlich ist bei der vorgestellten Prüfeinrichtung und dem Prüfverfahren lediglich, dass jeder Punkt des zu untersuchenden Bildausschnitts sowohl von kohärentem als auch von inkohärentem Licht erreicht wird. Auf diese Weise können große bis sehr große Bereiche eines Prüflings in einem einzigen Bild untersucht werden, wobei in jedem Bildpunkt die erforderliche Beleuchtungshelligkeit erreichbar und jeder Bildpunkt aus dem Bereich des Schwarzrauschens herausführbar ist. Insbesondere hat die Bedeutung an den Bildrändern. Damit lässt sich das Prüfverfahren gegenüber anderen Verfahren, die mit kleineren Bildausschnitten arbeiten, wesentlich beschleunigen.

Zur Beleuchtung des Prüflings mit inkohärentem Licht können Glühlampen, beispielsweise Halogenlampen, Leuchtstofflampen, weiße LEDs oder anderweitige monochromatische, farbige oder weiße Lichtquellen dienen. Vorzugsweise werden Lichtquellen angewendet, die diffuses Licht erzeugen. Dies hat den Vorteil, dass störende Lichtreflexe des Prüflings vermieden werden. Aufkleber, Glanzstellen oder andere sonst die Bildaufnahme störende Effekte, werden somit reduziert oder ausgeschlossen. Insbesondere kann auch die Wirkung von Schattenwürfen, wie sie von erhabenen oder vertieften Schriftzügen oder anderweitigen Vorsprüngen oder Vertiefungen ausgehen können, vermieden werden.

Die Beleuchtung des Prüflings sowohl mit kohärentem als auch mit inkohärentem Licht hat den weiteren Vorteil, dass sowohl ein Interferenzbild als auch ein nahezu natürliches Bild des Gegenstands erzeugt werden kann. Das Interferenzbild und das Weißlichtbild werden bei dieser Ausführungsform getrennt aufgenommen. Beispielsweise erfolgt die Beleuchtung zunächst mit gemischtem Licht (kohärent und inkohärent) zur Erzeugung des Interferenzbildes und danach nur mit inkohärentem Licht zur Erzeugung des natürlichen Bildes. Die beiden Bilder können überlagert oder getrennt auf einem Bildschirm dargestellt werden.

Der Vorteil der überlagerten Darstellung des Interferenzbildes und des natürlichen Bildes hat den Vorteil, dass der Betrachter Interferenzerscheinungen, die von Beschriftungen, Aufklebern, dem Reifenprofil oder sonstigen Profilierungen herrühren, von Interferenzbildern unterscheiden kann, die sich infolge von verdeckten Fehlern des Reifens oder sonstigen Prüflings ergeben.

Die überlagerte Darstellung von Interferenzbild und natürlichem Bild ist auch dann möglich, wenn der Prüfling ausschließlich gleichzeitig mit inkohärentem und kohärentem Licht beleuchtet wird. Die Aufnahme der verschiedenen Bilder kann mit getrennten Bildaufnahmeeinrichtungen oder einer einzigen Bildaufnahmeeinrichtung durchgeführt werden. Letzteres ist wegen der gleichen Perspektive bei der Bildaufnahme und somit der einfachen Bildüberlagerung zur Darstellung des Interferenzbildes und des natürlichen Bildes auf einem Bildschirm vorteilhaft.

Die Nachbearbeitung der von der Bildaufnahmeeinrichtung gelieferten Bildsignale zur Erzeugung des Interferenzbildes und zur Anzeige desselben sowie zur Erzeugung eines natürlichen Bildes und zur Anzeige desselben erfolgt vorzugsweise durch eine Bildverarbeitungseinrichtung. Diese kann beispielsweise so beschaffen sein, dass sie in einem Signalpfad in jedem Bildpunkt die bei verschiedener Phasenlage der Interferenzoptik aufgenommenen Helligkeitswerte ermittelt, um daraus durch Mittelwertbildung ein natürliches Bild ohne Interferenzerscheinung zu erzeugen, während sie in einem anderen Pfad aus den einzelnen Helligkeitswerten Phasenverschiebungen ermittelt und diese zur Anzeige bringt. Die beiden von den getrennten Pfaden erzeugten Signale können zusammengeführt werden, um das überlagerte Bild darzustellen.

Zur interferenzoptischen Auswertung des Prüflings kann die Bildaufnahmeeinrichtung zum Beispiel als Shearographieeinrichtung ausgebildet sein. Diese arbeitet mit von dem Prüfobjekt reflektiertem Licht, das auf zwei Lichtwege aufgesplittet wird. Der erste Lichtweg führt unmittelbar zu einer Bildaufnahmeeinrichtung, beispielsweise einer Kamera, während der zweite Lichtweg über einen bewegbaren Spiegel zu dieser Kamera führt. Zur Aufnahme shearographischer Bilder wird der Spiegel um eine ausgewählte Achse gekippt. In jeder Kippposition des Spiegels entstehen Specklebilder, wobei sich die Helligkeit der einzelnen Speckle bei einer Verschwenkung des Spiegels jeweils ändert. Drei verschiedene Spiegelpositionen ergeben somit drei verschiedene Helligkeitswerte für jeden Speckle. Aus den drei Helligkeitswerten lassen sich dann für jeden Speckle und somit auch für jeden Pixel die jeweilige Phasenlage für das diesem Pixel oder Speckle zugeordnete Licht berechnen. Eine Ausnahme bilden etwaige Einzelpixel in denen keine Modulation zu verzeichnen ist. Diese werden später in einer Bildnachbearbeitung behandelt. Wird der Prüfling nun belastet, ändert sich das Interferenzbild (Specklemuster). In dem belasteten Zustand können wiederum drei Speckle-Helligkeiten aufgenommen werden, die eine Lichtphasenlage ergeben. Die Phasenlagendifferenz zwischen belastetem und unbelastetem Zustand kann dann als Interferenzbild dargestellt werden. Daraus lassen sich die Verformungen des Prüflings ersehen, die sich zwischen belastetem und unbelastetem Zustand ergeben.

Die Shearographie wird vorzugsweise mit einer Shear-Richtung von 45° zum Objekt durchgeführt, um Verformungen zu erkennen. Es können aber auch andere Shear-Richtungen Anwendung finden. Außerdem können anderweitige interferenzoptische Auswerteverfahren zur Anwendung kommen. Zum Beispiel ist es möglich, zur Bestimmung der In-Plane-Verformung auf Speckle-Korrelationsverfahren zurückzugreifen. Diese beruhen darauf, das Speckle-Muster der verformten Fläche und das Speckle-Muster der unverformten Fläche miteinander zu vergleichen und aus der Veränderung Rückschlüsse über die Verlagerung der Oberfläche parallel zu der Oberfläche zu ziehen.

Einzelheiten der Erfindung werden an Hand von Zeichnungen in der nachfolgenden Beschreibung erläutert. In den Zeichnungen ist ein Ausführungsbeispiel der Erfindung veranschaulicht. Es zeigen:
- Fig. 1: eine Prüfeinrichtung für einen Reifen in einer Prinzipdarstellung;
- Fig. 2: die Prüfeinrichtung nach Fig. 1 mit einer prinzipiellen Darstellung der Bildaufnahme;
- Fig. 3: die Verschiebung des Ausgangssignals der Bildaufnahmeeinrichtung durch Weißlichtbeleuchtung;
- Fig. 4: die Darstellung eines Interferenzbildes und eines realistischen Bildes mit einer einzigen Bildwiedergabeeinrichtung,
- Fig. 5: Helligkeitswerte eines Bildpunkts zu verschiedenen Zeitpunkten als Diagramm und
- Fig. 6: eine Bildverarbeitungseinrichtung als Blockschaltbild.

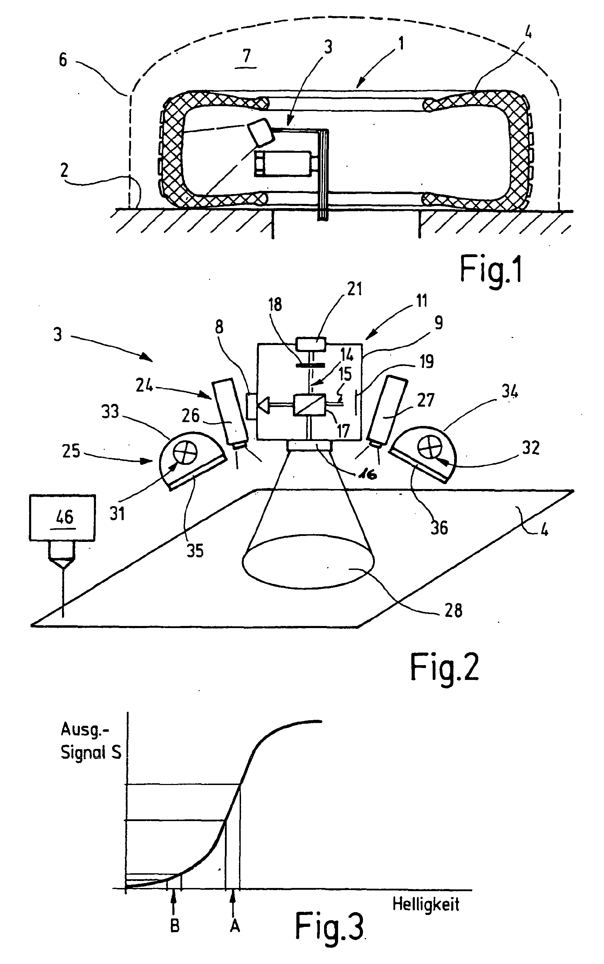

In Fig. 1 ist eine Prüfeinrichtung 1 veranschaulicht, zu der eine Aufnahmeeinrichtung beispielsweise ein Auflagetisch 2 und eine Inspektionseinheit 3 gehören. Letztere dient dazu einen Prüfling, beispielsweise einen Reifen 4 mit einem bildgebenden Verfahren zu inspizieren, insbesondere zur Fehlererfassung oder zur Erfassung sonstiger Unregelmäßigkeiten. Die Inspektionseinheit 3 kann wie veranschaulicht, so angeordnet sein, dass sie die Innenseite des Reifens 4 im Blickfeld hat. Sie kann jedoch auch außerhalb desselben angeordnet sein, um den Reifen 4 von außen zu inspizieren.

Nicht weiter veranschaulicht ist eine Einrichtung um den Reifen 4 verschiedenen Belastungszuständen zu unterwerfen. Dies kann erfolgen, indem der Auflagetisch 2 mit einer Glocke 6 versehen wird, in deren Innenraum 7 der Druck variierbar ist. Anstelle dessen kann jedoch auch der Innendruck des dann beispielsweise auf einer Felge oder einer anderen Aufnahmeeinrichtung montierten Reifens 4 verändert werden, wenn die Inspektion von außen erfolgt.

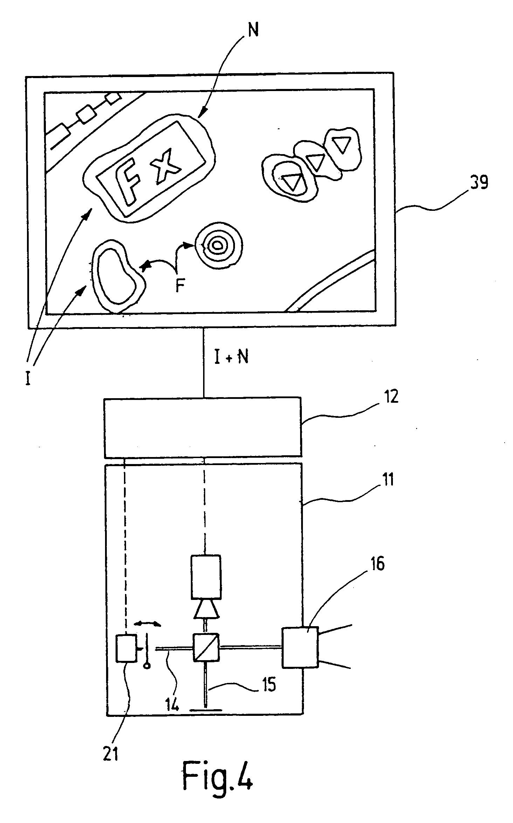

Die Inspektionseinheit 3 ist in Fig. 2 gesondert veranschaulicht. Sie weist eine Kamera 8 auf, der eine interferenzoptische Einrichtung 9 vorgelagert ist. Die Kamera 8 und die interferenzoptische Einrichtung 9 bilden eine interferenzoptische Bildaufnahmeeinrichtung 11, die, wie Fig. 4 veranschaulicht, an einer Bildverarbeitungseinrichtung 12 angeschlossen ist.

Die interferenzoptische Einrichtung 9 ist beispielsweise als Michelson-Interferometer oder als anderweitiges Interferometer ausgebildet, das zwei Lichtwege 14, 15 festlegt deren Länge oder Ausrichtung verstellbar ist. Dazu weist die interferenzoptische Einrichtung 9 im Anschluss an ein Objektiv 16 beispielsweise einen Strahlteiler 17 auf, der den Lichtweg 14 zu einem Spiegel 18 und den Lichtweg 15 zu einem Spiegel 19 führt. Der Spiegel 18 ist über eine Piezo-Einheit 21 kippbar angeordnet, wobei die Piezo-Einheit 21 von der Bildauswerteeinrichtung 12 (Fig. 4) gesteuert ist. Die Kamera 8 nimmt ein Bild auf, das durch Überlagerung der beiden Teilstrahlen 14, 15 in dem Strahlteiler 17 entstanden ist.

Das Objektiv 16 empfängt das von dem Prüfling (Reifen 4) rückgestreute Licht. Dieses stammt von einer ersten Beleuchtungseinrichtung 24, die kohärentes Licht erzeugt, sowie von einer zweiten Beleuchtungseinrichtung 25, die inkohärentes Licht erzeugt. Die erste Beleuchtungseinrichtung 24 kann beispielsweise ein oder mehrere Laser 26, 27, insbesondere Laserdioden enthalten. Diese beleuchten einen Ausschnitt 28 des Reifens 4, der von der Bildaufnahmeeinrichtung 11 beobachtet (gesehen) wird. Die Lichtkegel der Laser 26, 27 können sich dabei mehr oder weniger überlappen. Es wird angestrebt, dass die von den Lasern 26, 27 sowie eventuell weiteren Lasern in dem Ausschnitt 28 erzeugte Helligkeit an allen Punkten des Ausschnitts 28 möglichst gleich ist.

Die Beleuchtungseinrichtung 25 beleuchtet den Ausschnitt 28 zusätzlich mit inkohärentem Licht. Dazu dienen beispielsweise zwei Lichtquellen 31, 32, die weißes oder farbiges und vorzugsweise diffuses Licht erzeugen. Beispielsweise können die Lichtquellen 31, 32 Leuchtstofflampen, weiße Leuchtdioden oder Glühlampen sein. Sie können jeweils mit einem Reflektor 33, 34 versehen sein. Außerdem kann in dem Lichtweg der jeweiligen Lichtquelle 31, 32 jeweils ein Streuelement 35, 36 vorgesehen sein, um Diffuslicht zu erzeugen.

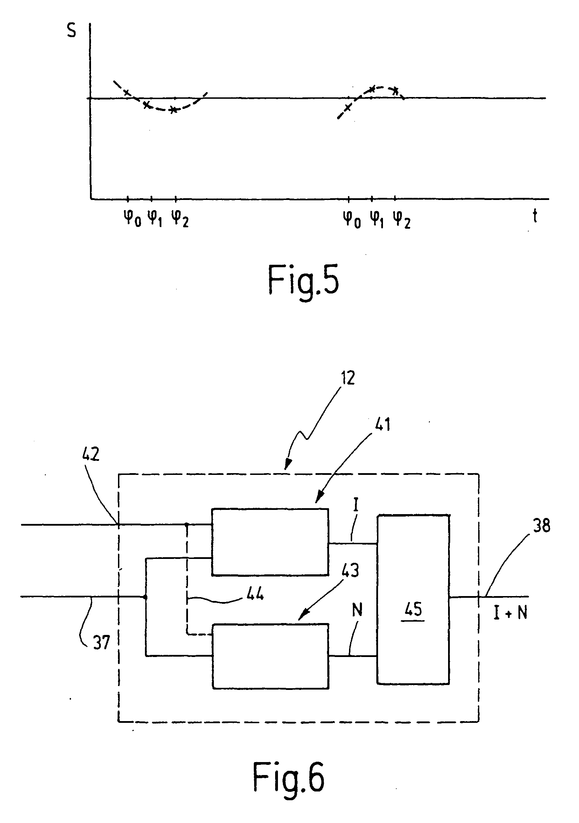

Die Bildauswerteeinrichtung 12 ist in Fig. 6 gesondert veranschaulicht. Sie ist mit ihrem Eingang 37 an die Kamera 8 angeschlossen. Mit ihrem Ausgang 38 ist sie an eine Bildwiedergabeeinrichtung 39 (Fig. 4), beispielsweise einen Monitor, angeschlossen. Dieser dient zur optischen Wiedergabe von Bildsignalen, die die Bildauswerteeinrichtung 12 abgibt.

Die Bildauswerteeinrichtung 12 weist einen ersten Kanal 41 auf, der über eine Steuerleitung 42 mit der Piezo-Einheit 21 verbunden ist, und der außerdem über den Eingang 37 Kameraausgangssignale erhält. Der Kanal 41 dient zur Bestimmung eines Interferenzbildes nach einem an späterer Stelle beschriebenen Verfahren.

Parallel zu dem Kanal 41 ist ein weiterer Kanal 43 vorgesehen, der aus den Bildsignalen der Kamera 8 ein Realbild bestimmt. Dies beispielsweise durch Mittelwertbildung einzelner Kamerabilder, die bei verschiedenen Positionen des Spiegels 18 aufgenommen worden sind. Bedarfsweise kann der Kanal 43 deshalb wie in Fig. 6 durch eine gestrichelte Linie 44 angedeutet ist, Signale erhalten, die die Position der Piezo-Einheit 21 kennzeichnen.

Die Ausgänge der Kanäle 41, 43 sind mit einer Überlagerungseinheit 45 verbunden, die die Ausgangssignale der beiden Kanäle 41, 43 summiert und das Summensignal an den Ausgang 38 abgibt.

Die soweit beschriebene Prüfeinrichtung 1 arbeitet wie folgt:

In Betrieb wird der Reifen 4 in dem Ausschnitt 28 sowohl von der Beleuchtungseinrichtung 24 als auch von der Beleuchtungseinrichtung 25 beleuchtet. In dem Ausschnitt 28 ergibt sich somit eine Gesamthelligkeit, die in Fig. 3 auf der horizontalen Achse veranschaulicht ist, und die in dem Bereich A liegt. Die allein von der kohärenten Beleuchtungseinrichtung 24 erzeugte Helligkeit liegt in einem Bereich B. Dieser ist durch die zusätzliche Beleuchtung mit weißem oder farbigem, jedenfalls aber inkohärentem ("billigem") Licht, in den Bereich A verschoben. In Fig. 3 ist außerdem die Kennlinie der Kamera 8 veranschaulicht, mit der diese in einem ausgewählten Bildpunkt Helligkeitssignale in elektrische Ausgangssignale umsetzt. Wie ersichtlich, ist der Bereich A so gewählt, dass die sich infolge der Interferenz ergebenden Helligkeitsschwankungen innerhalb des Bereichs A in einem Bereich maximaler Kennliniensteilheit der Kamera 8 liegen. Das Ausgangssignal S hat deshalb eine relativ große Amplitude. Demgegenüber hätte es eine weitaus geringere Amplitude ohne Weißlichtbeleuchtung, wenn die Helligkeit in dem Ausschnitt 28 im Bereich B liegt.

Zur Prüfung des Reifens 4 ruht dieser. Der Ausschnitt 28 wird nun zum Beispiel dreimal aufgenommen, das heißt es werden zunächst drei Einzelbilder erzeugt. Dies ist in Fig. 5 für einen willkürlich herausgegriffenen Bildpunkt veranschaulicht. Die von der Weißlichtbeleuchtung herrührende Grundhelligkeit erzeugt ein Ausgangssignal S, das in Fig. 5 durch eine horizontale Linie veranschaulicht ist. Bei einer ersten Position des Spiegels 18 entsteht zusätzlich zu der Grundhelligkeit ein überlagertes Interferenzbild, das in dem nun betrachteten Bildpunkt eine Helligkeit aufweist, die von der Grundhelligkeit etwas abweichen kann. Beispielsweise liegt sie etwas über der Grundhelligkeit. In anderen Bildpunkten kann dies anders aussehen. Jedenfalls aber liegt die Grundhelligkeit innerhalb des Bereichs A gemäß Fig. 3.

Zur Aufnahme des zweiten Bildes wird nun die Piezo-Einheit 21 betätigt, so dass sie die Phasenlage des Lichts in dem Lichtweg 14 etwas verschiebt. Dies ist in Fig. 5 bei ϕ1 der Fall. Die Helligkeit des betrachteten Bildpunkts hat sich nun infolge der geänderten Interferenz geändert. Im Beispiel hat sie abgenommen. Das zweite Bild wird nun registriert, indem, wie schon bei dem ersten Bild, wiederum alle Helligkeitswerte aller Bildpunkte des gesamten Bildes abgespeichert werden. Zur Aufnahme eines dritten Bildes für den Phasenwert ϕ2 wird zunächst wiederum die Piezo-Einheit 21 geringfügig verstellt. Das Helligkeitssignal S ändert wiederum seinen Wert, wie Fig. 5 veranschaulicht.

Aus den drei Signalwerten S für die Phasenwinkel ϕ0, ϕ1 und ϕ2 lässt sich nun die Phasenlage des betreffenden Bildpunkts berechnen. Dies beispielsweise indem die drei gemessenen Signalwerte durch eine um die Grundhelligkeit schwingende Sinusfunktion approximiert und deren Phasenlage bestimmt wird.

Ist die Phasenlage aller Bildpunkte bestimmt, wird diese abgespeichert, und es werden die Phasenlagen der Bildpunkte bei einer geänderten Belastung bestimmt. Dazu wird beispielsweise der Druck innerhalb der Glocke 6 geändert, und es werden wiederum drei Einzelbilder bei den Phasenlagen ϕ0, ϕ1 und ϕ2 aufgenommen, wie in Fig. 5 rechts veranschaulicht ist. Die sich ergebenden drei Signalwerte für jeden Bildpunkt bilden wiederum die Grundlage für die Bestimmung der Phasenlage des jeweils betreffenden Bildpunkts. Aus der Differenz der Phasenlage im Belastungszustand (Fig. 5 rechts) und der Phasenlage im nichtbelasteten Zustand (Fig. 5 links) lässt sich eine Phasendifferenz bilden. Die punktweise gebildete Phasendifferenz steht an dem Ausgang des Kanals 41 als Interferenzbild I an.

Der Kanal 43 soll demgegenüber ein natürliches Bild N erzeugen. Dazu werden wahlweise die im ersten Belastungszustand oder die im zweiten Belastungszustand aufgenommenen Bilder oder alle sechs Bilder verwendet. In jedem Bildpunkt wird der Mittelwert aus den drei gemessenen Helligkeitswerten (Signalwerte S) gebildet. Der somit gemittelte Wert ist der Signalwert für ein natürliches Bild N. Alternativ kann zur Bestimmung eines natürlichen Bildes N auch die kohärente Beleuchtung kurzzeitig abgeschaltet werden und nur das durch Weißlichtbeleuchtung erzeugte Bild in dem Kanal 43 weiterverarbeitet werden. Durch die Inkohärenz der Beleuchtung entstehen auch keine stationären Interferenzmuster, wodurch trotz Interferenzoptik ein natürliches Bild N erhältlich ist. Bedarfsweise kann eine Bildpunktintegration durchgeführt werden, indem die Bildpunkthelligkeit jeweils über einen gewissen Zeitraum bei der Bildaufnahme gemittelt wird.

Zur Darstellung des Interferenzbildes I und des natürlichen Bildes N werden diese in der Überlagerungseinheit 45 addiert, und das Summensignal wird an die Bildwiedergabeeinrichtung 39 übermittelt. Auf dieser wird dann das natürliche Bild N, zum Beispiel wie auf einem Fernsehbildschirm, dargestellt. Die in dem Kanal 41 errechneten Interferenzmuster werden als Interferenzbild I veranschaulicht. Beispielsweise sind dies, wie aus Fig. 4 ersichtlich, fleck- oder ringförmige Gebiete, die Bereiche größerer Reifenverformung bei der Belastung darstellen. Es ist auch möglich, das Interferenzbild in auffälligen, geeignet gewählten Farben darzustellen, um einen optischen Kontrast zum natürlichen Bild N zu schaffen.

Durch die Überlagerung der Darstellung des Interferenzbildes I und des natürlichen Bildes N kann der Bediener wirkliche Fehlstellen F von Interferenzbildern unterscheiden, die infolge von ordnungsgemäß vorhandenen Reifenstrukturen, beispielsweise Etiketten oder Beschriftungen, entstehen.

Die erfindungsgemäße Prüfeinrichtung 1 weist eine interferenzoptische Bildaufnahmeeinrichtung 11 auf, die von dem Prüfling 4 zurückgeworfenes Streulicht aufnimmt. Von der Bildaufnahmeeinrichtung 11 erzeugte Bilder werden einer Bildauswerteeinrichtung 12 zugeführt, die zumindest ein Interferenzbild und optional auch ein natürliches Bild N ermittelt. Zur Verbesserung des Signalrauschabstands des Interferenzbildes I wird die Grundhelligkeit bei der Bilderzeugung mittels inkohärenter Beleuchtung verbessert. Lediglich ein Teil der zur Aussteuerung einer Kamera 8 erforderlichen Lichtintensität ist somit durch eine Beleuchtungseinrichtung 24 aufzubringen, die kohärentes Licht erzeugt. Der weitaus größere Teil der Helligkeit, das heißt der größere Teil der erforderlichen Lichtenergie, stammt von einer Beleuchtungseinrichtung 25, die inkohärentes Licht erzeugt. Somit ist auf einfache und zuverlässige Weise die ausreichende Beleuchtung von auch schwach reflektierenden Prüflingsoberflächen (schwarzer Gummi) mittels einer kostengünstigen Beleuchtungseinrichtung möglich, wobei überdies die interferenzoptische Auswertung des reflektierten Lichts ermöglicht wird.

Optional ist es möglich, die erfindungsgemäße Prüfeinrichtung 1 mit einer Lasermarkierungseinrichtung 46 (Fig. 2) zu koppeln, um die geprüften Reifen 4 hier entsprechend dem Prüfergebnis zu kennzeichnen. Die Kennzeichnung kann zum Beispiel in einer Beschriftung oder in einer anderweitigen Kodierung bestehen. Die Lasermarkierungseinrichtung 46 kann somit eine Beschriftungseinheit oder auch eine frei positionierbare Einheit sein, beispielsweise um entdeckte Fehlstellen durch einen Bediener markieren zu können. Beispielsweise kann die Lasermarkierungseinrichtung 46 in zwei oder mehr Achsen bewegbar gelagert und über eine entsprechende Positioniervorrichtung angesteuert sein, so dass der Bediener den Laserkopf der Lasermarkierungseinrichtung 46 durch eine geeignete Eingabeeinrichtung, beispielsweise einen oder mehrere Betätigungshebel oder eine Maus, führen kann.

Anstelle der Lasermarkierungseinrichtung 46 kann auch eine anderweitige Markierungseinrichtung, zum Beispiel eine Farbmarkiereinrichtung, eine Tintenstrahl-Druckeinrichtung, eine Etikettenklebeeinrichtung oder Ähnliches, Anwendung finden.

### Bezugszeichenliste

- 1: Prüfeinrichtung
- 2.: Auflagetisch
- 3: Inspektionseinheit
- 4: Reifen
- 6: Glocke
- 7: Innenraum
- 8: Kamera
- 9: interferenzoptische Einrichtung
- 11: Bildaufnahmeeinrichtung
- 12: Bildverarbeitungseinrichtung
- 14: Lichtweg
- 15: Lichtweg
- 16: Objektiv
- 17: Strahlteiler
- 18: Spiegel
- 19: Spiegel
- 21: Piezo-Einheit
- 24: erste Beleuchtungseinrichtung
- 25: zweite Beleuchtungseinrichtung
- 26: Laser
- 27: Laser
- 28: Ausschnitt
- 31: Lichtquelle
- 32: Lichtquelle
- 33: Reflektor
- 34: Reflektor
- 35: Steuerelement
- 36: Steuerelement
- 37: Eingang
- 38: Ausgang
- 39: Bildwiedergabeeinrichtung
- 41: Kanal
- 42: Steuerleitung
- 43: Kanal
- 44: Linie
- 45: Überlagerungseinheit
- 46: Lasermarkierungseinrichtung

- A: Bereich
- B: Bereich
- F: Fehlstellen
- I: Interferenzbild
- N: natürliches Bild
- S: Ausgangssignal
- ϕ0: Phasenwinkel
- ϕ1: Phasenwinkel
- ϕ2: Phasenwinke

## Patentansprüche

1. Prüfeinrichtung für verformbare Prüflinge, insbesondere für Reifen (4), mit
einer Einrichtung zur Überführung des Prüflings (4) in wenigstens zwei unterschiedliche Belastungszustände;
einer ersten Beleuchtungseinrichtung (24) zur Beleuchtung eines Ausschnitts (28) des Prüflings (4) mit kohärentem Licht;
einer zweiten Beleuchtungseinrichtung (25) zur überlagerten Beleuchtung des Ausschnitts (28) des Prüflings (4) mit inkohärentem Licht;
einer interferenzoptischen Bildaufnahmeeinrichtung (11) zur Aufnahme des Prüflings (4) und zur Erzeugung von Bildsignalen und
einer Bildwiedergabeeinrichtung (39) zur Wiedergabe eines Bildes (I, N), das auf den von der Bildaufnahmeeinrichtung (11) abgegebenen Bildsignalen beruht; **dadurch gekennzeichnet, dass**
durch die zweite Beleuchtungseinrichtung (25) in dem Ausschnitt (28) des Prüflings (4) eine Grundhelligkeit erzeugbar ist, welche die Empfindlichkeit der Bildaufnahmeeinrichtung (11) erhöht.

2. Prüfeinrichtung nach Anspruch 1, **dadurch gekennzeichnet, dass** die Bildaufnahmeeinrichtung (11) eine Kennlinie hat,
wobei die zweite Beleuchtungseinrichtung (25) geeignet ist, in dem Ausschnitt (28) des Prüflings (4) eine Grundhelligkeit zu erzeugen, durch die der Arbeitspunkt der Bildaufnahmeeinrichtung (11) in einen Bereich maximaler Steilheit der Kennlinie verlagerbar ist.

3. Prüfeinrichtung nach Anspruch 1 oder 2, **dadurch gekennzeichnet, dass** die zweite Beleuchtungseinrichtung (25) nichtmonochromatisches oder farbiges oder weißes Licht abgibt.

4. Prüfeinrichtung nach einem der Ansprüche 1 bis 3, **dadurch gekennzeichnet, dass** die zweite Beleuchtungseinrichtung (25) diffuses Licht abgibt.

5. Prüfeinrichtung nach einem der Ansprüche 1 bis 4, **dadurch gekennzeichnet, dass** die erste Beleuchtungseinrichtung (24) ein oder mehrere Lichtquellen (26, 27), die jeweils kohärentes Licht abgegeben, aufweist, wobei das Licht verschiedener Lichtquellen (26, 27) inkohärent ist.

6. Prüfeinrichtung nach Anspruch 5, **dadurch gekennzeichnet, dass** die Lichtquellen (26, 27) Lichtkegel aufweisen, die sich teilweise oder vollständig überlappen.

7. Prüfeinrichtung nach einem der Ansprüche 1 bis 6, **dadurch gekennzeichnet, dass** die erste Beleuchtungseinrichtung (24) und die zweite Beleuchtungseinrichtung (25) den Prüfling (4) gleichzeitig beleuchten,
wobei vorzugsweise jeder Punkt des Ausschnitts (28) des Prüflings (4) sowohl von kohärentem als auch von inkohärentem Licht beleuchtet wird.

8. Prüfeinrichtung nach einem der Ansprüche 1 bis 7, **dadurch gekennzeichnet, dass** die Bildaufnahmeeinrichtung (11) zwei Lichtwege (14, 15) aufweist,
wobei wenigstens einer der Lichtwege (14, 15) eine Phasenmodulationseinrichtung (21) aufweist, mit der die Phasenlage in einem Lichtweg (14) gesteuert beeinflussbar ist, und
wobei die Bildaufnahmeeinrichtung (11) Interferenzbilder (I) aufnimmt, die jeweils durch Überlagerung des auf den beiden Lichtwegen (14, 15) an die Bildaufnahmeeinrichtung (11) herangeführten Lichts erzeugt worden sind.

9. Prüfeinrichtung nach Anspruch 8, **dadurch gekennzeichnet, dass** die Bildaufnahmeeinrichtung (11) an eine Bildauswerteeinrichtung (12) angeschlossen ist, die aus den Interferenzbildern (I) zweier unterschiedlicher Belastungszustände ein Verformungsbild erstellt.

10. Prüfeinrichtung nach Anspruch 9, **dadurch gekennzeichnet, dass** die Bildauswerteeinrichtung (12) aus den von der Bildaufnahmeeinrichtung (11) abgegebenen Signalen ein natürliches Bild (N) erzeugt und an die Bildwiedergabeeinrichtung (39) übermittelt.

11. Prüfeinrichtung nach einem der Ansprüche 1 bis 10, **gekennzeichnet durch** eine Markierungseinrichtung (46).

12. Prüfeinrichtung nach Anspruch 11, **dadurch gekennzeichnet, dass** die Markierungseinrichtung eine Lasermarkierungseinrichtung (46) ist.

13. Verfahren zum Prüfen von verformbaren Prüflingen, insbesondere von Reifen (4), bei dem
der Prüfling (4) in wenigstens zwei unterschiedliche Belastungszustände überführt wird;
ein Ausschnitt (28) des Prüflings (4) mittels einer ersten Beleuchtungseinrichtung (24) mit kohärentem Licht beleuchtet wird;
der Ausschnitt (28) des Prüflings (4) mittels einer zweiten Beleuchtungseinrichtung (25) mit inkohärentem Licht beleuchtet wird;
der Prüfling (4) mittels einer interferenzoptischen Bildaufnahmeeinrichtung (11) aufgenommen wird;
Bildsignale mittels der Bildaufnahmeeinrichtung (11) erzeugt werden und
ein Bild (I, N), das auf den von der Bildaufnahmeeinrichtung (11) abgegebenen Bildsignalen beruht, mittels einer Bildwiedergabeeinrichtung (39) wiedergegeben wird; **dadurch gekennzeichnet, dass**
durch die zweite Beleuchtungseinrichtung (25) in dem Ausschnitt (28) des Prüflings (4) eine Grundhelligkeit erzeugt wird, welche die Empfindlichkeit der Bildaufnahmeeinrichtung (11) erhöht.

14. Verfahren nach Anspruch 13, **dadurch gekennzeichnet, dass** jeder Punkt des Ausschnitts (28) des Prüflings (4) sowohl von kohärentem als auch von inkohärentem Licht beleuchtet wird.

15. Verfahren nach Anspruch 13 oder 14, **dadurch gekennzeichnet, dass** aus den Bildsignalen ein Interferenzbild (I) und ein natürliches Bild (N) erzeugt werden.

16. Verfahren nach Anspruch 15, **dadurch gekennzeichnet, dass** das Interferenzbild (I) und das natürliche Bild (N) von der Bildaufnahmeeinrichtung (11) getrennt aufgenommen werden.

17. Verfahren nach Anspruch 15 oder 16 **dadurch gekennzeichnet, dass** das Interferenzbild (I) und das natürliche Bild (N) getrennt oder überlagert durch die Bildwiedergabeeinrichtung (39) angezeigt werden.

## Claims

1. Testing device for deformable test objects, in particular for tires (4) with
a device for transferring the test object (4) into at least two different loaded states;
a first lighting device (24) for illuminating a section (28) of the test object (4) with coherent light:
a second lighting device (25) for superimposed illumination of the section (28) of the test object (4) with incoherent light;
an optical interference image capturing device (11) for recording the test object (4) and for generating image signals and
an image reproduction device (39) for reproducing an image (I, N) on the basis of the image signal provided by the image capturing device (11):
wherein a basic level of brightness can be generated by the second lighting device (25) in the section (28) of the test object (4) which increases the sensitivity of the image capturing apparatus (11).

2. Test device according to Claim 1 **characterised in that** the image capturing device (11) has a characterising curve,
wherein the second lighting device (25) is suitable for generating a basic brightness in the section (28) of the test object (4) by means of which the operating point of the image capturing device (11) can be relocated into an area of maximum steepness of the characterising curve.

3. Test device according to claim 1 or 2 **characterised in that** the second lighting device (25) does emit non-monochromatic, coloured or white light.

4. Test device according to any of the claims 1 to 3 **characterised in that** the second lighting device (25) emits diffuse light.

5. Test device according to any of the claims 1 to 4 **characterised in that** the first lighting device (24) has one or more light sources (26, 27) each emitting coherent light, wherein the light from different light sources (26, 27) is incoherent.

6. Test device according to Claim 5 **characterised in that** the light sources (26, 27) display cones of light which overlap each other entirely or in part.

7. Test device according to any of the claims 1 to 6 **characterised in that** the first lighting device (24) and the second lighting device (25) illuminate the test object (4) at the same time,
wherein preferably every point of the section (28) of the test object (4) is illuminated by both coherent and incoherent light.

8. Test device according to any of the claims 1 to 7 **characterised in that** the image capturing device (11) has two optical paths (14, 15)
wherein at least one of the optical paths (14, 15) has a phase modulation device (21) with which the phase position in an optical path (14) can be controllably influenced and
wherein the image capturing device (11) records interference images (I) which are each generated by the overlapping of the light from the two light sources guided along both the optical paths (14, 15) onto the image capturing device (11).

9. Test device according to Claim 8 **characterised in that** the image capturing device (11) is connected to an image evaluation device (12) which composes a deformation image from the interference images (I) of two different load states.

10. Test device according to Claim 9 **characterised in that** the image evaluation device (12) generates a natural image (N) from the signals provided by the image capturing device (11) and transmits the said image to the image reproduction device (39).

11. Test device according to any of the claims 1 to 10 **characterised by** a marking device (46).

12. Test device according to Claims 11 **characterised in that** the marking device is a laser marking device (46).

13. Method for the testing of deformable test objects, in particular tires (4), in which
the test object (4) is transferred into at least two different load states;
a section (28) of the test object (4) is illuminated by coherent light provided by a first lighting device (24);
the section (28) of the test object (4) is illuminated by incoherent light provided by a second lighting device (25);
the test object (4) is recorded by an optical interference image capturing device (11);
image signals are generated by the image capture device (11) and
an image (I, N) which is based on the image signal emitted by the image recording device (11) is reproduced by means of an image reproduction device (39);
wherein a basic level of brightness is generated by the second lighting device (25) in the section (28) of the test object (4) which increases the sensitivity of the image capturing device (11).

14. Method according to Claim 13 **characterised in that** every point of the section (28) of the test object (4) is illuminated by both coherent and incoherent light.

15. Method according to Claim 13 or Claim 14 **characterised in that** an interference image (I) and a natural image (N) are generated from the image signals.

16. Method according to Claim 15 **characterised in that** the interference image (I) and the natural image (N) are recorded separately by the image capturing device (11).

17. Method according to Claim 15 or Claim 16 **characterised in that** the interference image (I) and the natural image (N) are shown separately or overlapped by the image reproduction device (39).

## Revendications

1. Appareil d'essais pour échantillons déformables, en particulier pour des pneumatiques (4), comprenant :
des moyens pour mettre l'échantillon (4) dans au moins deux états de charge différents ;
un premier agencement d'éclairage (24) pour éclairer une portion (28) de l'échantillon (4) avec une lumière cohérente ;
un second agencement d'éclairage (25) pour assurer un éclairage superposé de la portion (28) de l'échantillon (4) avec une lumière non cohérente;
un dispositif de prise d'images (11) optique à interférences pour prendre des images de l'échantillon (4) et pour générer des signaux images ; et
un dispositif de restitution d'images (39) pour restituer une image (I, N) basée sur les signaux images délivrés par le dispositif de prise d'images (11) ;
dans lequel, au moyen du second agencement d'éclairage (25), il est possible de générer dans la portion (28) de l'échantillon (4) une luminosité de base qui augmente la sensibilité du dispositif de prise d'images (11).

2. Appareil d'essais selon la revendication 1, **caractérisé en ce que** le dispositif de prise d'images (11) présente une courbe caractéristique,
et le second agencement d'éclairage (25) convient pour générer dans la portion (28) de l'échantillon (4) une luminosité de base au moyen de laquelle le point de fonctionnement du dispositif de prise d'images (11) peut être déporté dans une zone dans laquelle la courbe caractéristique présente une pente maximum.

3. Appareil d'essais selon la revendication 1 ou 2, **caractérisé en ce que** le second agencement d'éclairage (25) fournit une lumière non-monochromatique ou en couleurs ou blanche.

4. Appareil d'essais selon l'une des revendications 1 à 3, **caractérisé en ce que** le second agencement d'éclairage (25) fournit une lumière diffuse.

5. Appareil d'essais selon l'une des revendications 1 à 4, **caractérisé en ce que** le premier agencement d'éclairage (24) comprend une ou plusieurs sources lumineuses (26, 27) qui fournissent chacune une lumière cohérente, et la lumière de diverses sources lumineuses (26, 27) est non cohérente.

6. Appareil d'essais selon la revendication 5, **caractérisé en ce que** les sources lumineuses (26, 27) présentent des cônes d'éclairage qui se chevauchent partiellement ou complètement.

7. Appareil d'essais selon l'une des revendications 1 à 6, **caractérisé en ce que** le premier agencement d'éclairage (24) et le second agencement d'éclairage (25) éclairent simultanément l'échantillon (4),
et de préférence chaque point de la portion (28) de l'échantillon (4) est éclairé aussi bien par une lumière cohérente que par une lumière non cohérente.

8. Appareil d'essais selon l'une des revendications 1 à 7, **caractérisé en ce que** le dispositif de prise d'images (11) présente deux parcours de lumière (14, 15),
l'un au moins des parcours de lumière (14, 15) comprend un agencement de modulation de phase (21) au moyen duquel il est possible d'influencer de façon commandée la situation de phase dans un parcours de lumière (14), et
le dispositif de prise d'images (11) prend des images à interférences (I) qui ont été respectivement générées par superposition de la lumière amenée au dispositif de prise d'images (11) par les deux parcours de lumière (14, 15).

9. Appareil d'essais selon la revendication 8, **caractérisé en ce que** le dispositif de prise d'images (11) est branché à des moyens d'évaluation d'images (12) qui réalisent une image de déformation à partir des images à interférences (I) dans deux états de charge différents.

10. Appareil d'essais selon la revendication 9, **caractérisé en ce que** les moyens d'évaluation d'images (12) engendrent une image naturelle (N) à partir des signaux fournis par le dispositif de prise d'images (11) et la transmettent au dispositif de restitution d'images (39).

11. Appareil d'essais selon l'une des revendications 1 à 10, **caractérisé par** un dispositif de marquage (46).

12. Appareil d'essais selon la revendication 11, **caractérisé en ce que** le dispositif de marquage est un dispositif de marquage à laser (46).

13. Procédé d'essai d'échantillons déformables, en particulier de pneumatiques (4), dans lequel :
l'échantillon (4) est mis dans au moins deux états de chargement différents;
une portion (28) de l'échantillon (4) est éclairée au moyen d'un premier agencement d'éclairage (24) avec une lumière cohérente ;
la portion (28) de l'échantillon (4) est éclairée au moyen d'un second agencement d'éclairage (25) avec une lumière non cohérente;
on prend une image de l'échantillon (4) au moyen d'un dispositif de prise d'images (11) optique à interférences ;
on génère des signaux images au moyen du dispositif de prise d'images (11) ; et
on restitue une image (I, N), basée sur des signaux images fournis par le dispositif de prise d'images (11), au moyen d'un dispositif de restitution d'images (39) ; et, au moyen du second agencement d'éclairage (25), on engendre dans la portion (28) de l'échantillon (4) une luminosité de base qui augmente la sensibilité du dispositif de prise d'images (11).

14. Procédé selon la revendication 13, **caractérisé en ce que** chaque point de la portion (28) de l'échantillon (4) est éclairé aussi bien avec une lumière cohérente qu'avec une lumière non cohérente.

15. Procédé selon la revendication 13 ou 14, **caractérisé en ce que** l'on génère à partir des signaux images une image à interférences (I) et une image naturelle (N).

16. Procédé selon la revendication 15, **caractérisé en ce que** l'image à interférences (I) et l'image naturelle (N) sont prises séparément par le dispositif de prise d'images (11).

17. Procédé selon la revendication 15 ou 16, **caractérisé en ce que** l'image à interférences (I) et l'image naturelle (N) sont présentées par le dispositif de restitution d'images (39) séparément ou en superposition.
